# EUROPEAN PATENT APPLICATION

(11) **EP 4 614 179 A1**
(43) Date of publication of application: **10.09.2025**
(21) Application number: 24161486.6
(22) Date of filing: 05.03.2024
(51) Int. Cl.: G01S 5/00, G01S 5/02, G01S 5/14

(54) **A COMPUTER-IMPLEMENTED METHOD FOR GENERATING A PREDICTOR FOR A POSITION OF AN OBJECT WITHIN A PREDETERMINED ENVIRONMENT BY THE USE OF A RADIO NETWORK**

(71) Applicant: Siemens Aktiengesellschaft, 80333 München (DE)
(72) Inventor: Bröring, Arne, 81735 München (DE); Duong, Phuong Bich, 91052 Erlangen (DE)
(74) Representative: Siemens Patent Attorneys

(57) **Abstract**

The invention relates to a computer-implemented method for generating a predictor for a position (pos) of an object (O) within a predetermined environment (EN) by the use of a radio network (RN), where the radio network (RN) comprises a plurality of anchors (a1, ..., a5) being receivers for radio signals (rs) within the radio network (RN), wherein a position estimator (PE) in a positioning server (PS) is provided for estimating the position (pos) of the object (O) based on propagation delays of radio signals (rs) received by different anchors (a1, ..., a5) in response to a transmission event of a radio tag (t) on the object (O), the method comprising the following steps for a respective anchor (a1, ..., a5) of the plurality of anchors (a1, ..., a5):
i) training for the respective anchor (a1, ..., a5) a signal classifier (SC) and locally storing in the respective anchor (a1, ..., a5) the trained signal classifier (SC) for being executed on the respective anchor (a1, ..., a5), the signal classifier (SC) being configured to classify the signal quality of a radio signal (rs) received by the respective anchor (a1, ..., a5) by determining a signal quality class (QC1, ..., QCn) out of a plurality of signal quality classes (QC1, ..., QCn) for the received radio signal (rs) based on signal amplitude information (CIR) of the received radio signal (rs);
ii) configuring the respective anchor (a1, ..., a5) such that the respective anchor (a1, ..., a5) forwards a received radio signal (rs) to the positioning server (PS) for a position estimation by the position estimator (PE) only in case that the signal quality class (QC1, ..., QCn) determined by the signal classifier (SC) of the respective anchor (a1, ..., a5) fulfills a threshold criterion (TC) with respect to a minimum signal quality.

## Description

The invention relates to a computer-implemented method for generating a predictor for a position of an object within a predetermined environment by the use of a radio network.

Localization systems based on radio technologies are important in different application fields. Particularly, for an intelligent management and usage of assets, e.g. tools within an industrial environment or medical devices within a hospital, it is necessary to have access to the information about the location of these assets.

Localization systems can use different radio technologies such as UWB, WiFi or cellular networks. Different methods are known to determine the position of an object based on those radio technologies. One class of those methods refer to geometric approaches using the time difference of arrival (TDoA) or the time-of-flight (ToF) of radio signals for deducting the position of an object based on multilateration.

TDoA positioning relies on the measurement of time differences between the arrival times of radio signals at multiple anchors within the radio network. By comparing these time differences, the position of a corresponding object can be determined.

Localization based on ToF uses the information of the travel time of a short radio pulse between a transmitter and a receiver. This time delay is converted into a distance using the speed of light. Multiple ToF measurements referring to different receivers can be used to triangulate the position of the sender.

Two-Way Ranging (TWR) is a specific method of ToF-based ranging that involves a two-way communication exchange between a sender and a receiver. In TWR, the sender sends a signal to the receiver, and the receiver responds with a signal back to the sender. The time it takes for the entire round-trip journey of the signal is measured. By halving this round-trip time and multiplying it by the speed of light, the distance between the sender and the receiver can be calculated.

Within indoor environments, it is difficult to achieve a high positional accuracy by the above-described technologies because radio signals can experience attenuation, reflections and scattering, resulting in multipath effects. Particularly, when radio signals bounce off walls, floors and objects, those signals can interfere with the direct Line-of-Sight (LOS) path and lead to inaccuracies in distance measurements. Furthermore, Non-Line-of-Sight (NLOS) paths can occur between a sender and a receiver in case that radio signals encounter obstacles that obstruct the direct LOS path. NLOS conditions can result in longer path lengths and distorted signal paths, leading to errors in distance measurements and position estimation.

Several approaches are known from the prior art to address multipath effects and Non-Line-of-Sight situations. E.g., ray-tracing techniques and propagation models can help to predict and simulate multipath effects and NLOS conditions. Such models provide insights into signal behavior and help to develop compensation strategies.

Furthermore, multipath mitigation can be performed by specific signal processing algorithms. By analyzing the received signal waveform and its reflections, the direct path signal can be separated from multipath components, improving the accuracy of the distance measurements.

Up to now, localization systems based on propagation delays of radio signals (i.e. systems based on TDoA, ToF or TWR) are implemented in a positioning engine located in a central positioning server. This implies that radio signals received by corresponding anchors need to be transmitted by the anchors to the central positioning engine resulting in high data traffic. Furthermore, radio signals of low quality, such as multipath signals, are processed by the central positioning engine lowering the positional accuracy.

It is an object of the invention to generate a predictor for a position of an object by the use of a radio network having a high positional accuracy and resulting in less data traffic between a positioning engine and corresponding anchors in the radio network.

This object is solved by the method according to claim 1. Preferred embodiments of the invention are described in the dependent claims.

The computer-implemented method according to the invention generates a predictor for a position of an object within a predetermined environment by the use of radio network, where the radio network comprises a plurality of anchors being receivers for radio signals within the radio network. Furthermore, a position estimator in a positioning server is provided for estimating the position of the object based on propagation delays of radio signals received by different anchors in response to a transmission event of a radio tag on the object. Those propagation delays may e.g. be derived by TDoA, ToF or TWR. The method according to the invention comprises the following steps i) and ii) for a respective anchor of the plurality of anchors.

In step i), a signal classifier is trained for the respective anchor (i.e. each anchor of the plurality of anchors) and the trained signal classifier is stored locally in the respective anchor for being executed on the respective anchor. Depending on the circumstances, the training of signal classifier may be performed outside the anchor. In this case, the signal classifier is stored on the respective anchor after training. Alternatively, the (untrained) signal classifier is initially stored locally on the anchor and the training is performed for the locally stored signal classifier. After training, the signal classifier is configured to classify the signal quality of a radio signal received by the respective anchor by determining a signal quality class out of a plurality of signal quality classes for the received radio signal based on signal amplitude information of the received radio signal. In a preferred embodiment, this single amplitude information is the well-known channel impulse response being the signal received by a corresponding anchor in response to a radio pulse transmitted at a transmission event.

The training of the signal classifier in step i) is based on machine learning using training data comprising, for each transmission event of a plurality of transmission events of a sender out of one or more senders which are located within the predetermined environment and are of the same type as the radio tag on the object, the signal amplitude information of the radio signal received by the respective anchor in response to the respective transmission event.

In step ii), the respective anchor is being configured such that the respective anchor forwards a received radio signal to the positioning server for a position estimation by the position estimator only in case the signal quality class of the received radio signal determined by the signal classifier of the respective anchor fulfills a threshold criterion with respect to a minimum signal quality. In other words, the respective anchor only forwards radio signals having a high signal quality based on the corresponding threshold criterion. The threshold criterion is to be interpreted broadly and needs not refer explicitly to a threshold value. E.g., the threshold criterion can be defined such that a specific number of the signal quality classes having the highest signal quality fulfill the threshold criterion and the other signal quality classes do not.

The method of the invention has the advantage that a local filter is implemented in each anchor so that radio signals of low quality are no longer transmitted to and processed by the position estimator. This leads to less data traffic and higher accuracy in the position estimation.

In a preferred variant of the invention, the radio network is based on a short-range radio technology, preferably UWB (UWB = Ultra-Wide Band; IEEE standard family 802.15-4). Alternatively, the radio network may be based on a cellular radio technology, preferably 5G or 6G.

Different machine learning methods for training the above-described signal classifier may be implemented. In one embodiment of the invention, the signal classifier for the respective anchor is a neural network structure comprising one or more neural networks. In a preferred embodiment, the one or more neural networks comprise one or more convolutional neural networks which are well known from the prior art and/or one or more deep neural networks being characterized by several hidden layers. The training of the neural network structure is achieved by a supervised learning. To do so, the training data comprise, besides the signal amplitude information of the radio signal received by the respective anchor in response to the respective transmission event, a ranging error for the respective anchor. This ranging anchor represents the difference between a ground truth distance and an estimated distance of the respective anchor from the sender, where the difference is derived from a ground truth position of the sender and the position of the sender estimated by the position estimator for the respective transmission event. The ground truth position is the assumed real position of the sender. In a preferred embodiment, this ground truth position is measured by an accurate measurement system, e.g. a LIDAR or optical system which moves together with the sender when collecting the training data. Preferably, the LIDAR or optical system and the sender are located on the same platform.

The machine learning of the neural network structure has the target that the neural network structure outputs, for a respective transmission event of the training data, the ranging error for the respective anchor of the training data as a result of an input of the signal amplitude information of the radio signal received by the respective anchor in response to the respective transmission event of the training data. Furthermore, the signal classifier stores adjoining intervals of ranging errors as signal quality classes in order to assign a ranging error output by the neural network structure and thus the radio signal received by the respective anchor having the signal amplitude information which is the input of the neural network structure to the signal quality class corresponding to the interval in which the ranging error lies.

Instead of the above described learning approach based on a neural network structure, the method of the invention may also use a clustering classifier trained by unsupervised machine learning. In other words, the training of the signal classifier for the respective anchor may comprise a training of a clustering classifier by unsupervised machine learning based on the signal amplitude information of the radio signal received by the respective anchor for each transmission event of the training data, where the trained clustering classifier is configured to assign to a radio signal received by the respective anchor a cluster class out of a plurality of cluster classes based on the signal amplitude information of the radio signal. This clustering classifier is combined with a subsequent assignment procedure which assigns the plurality of signal quality classes to corresponding cluster classes.

The assignment procedure as described above may be based on supervised learning or unsupervised learning. In the following, a variant of a supervised learning and a variant of an unsupervised learning for the assignment procedure are described.

In the unsupervised learning approach of the assignment procedure, for each preset transmission event out of a group of preset transmission events of a sender out of the one or more senders, radio signals together with the ground truth positions of the sender at the time of transmitting the radio signals are provided. Each provided radio signal is a radio signal received by another anchor of the plurality of anchors in response to the respective preset transmission event. Here and in the following, the terms "preset transmission event" and "group of preset transmission events" indicate that the preset transmission events need not correspond to the transmission events of the plurality of transmission events included in the training data. In a preferred embodiment, the preset transmission events are different from the transmission events of the training data. However, it is allowed that one or more of the preset transmission events are transmission events of the training data. Furthermore, the number of preset transmission events is preferably lower than the number of transmission events within the training data.

In the assignment procedure based on the unsupervised learning approach, an iteration over the preset transmission events is performed for the respective anchor for which the signal classifier is trained. An iteration step of the iteration for a respective preset transmission comprises the following sub-steps a) to d).

In step a), a cluster class of the plurality of cluster classes is assigned to the radio signal received by the respective anchor using the trained clustering classifier of the respective anchor.

In step b), the position of the sender is estimated by the position estimator in the positioning server based on the propagation delays of all radio signal received by the plurality of anchors in response to the respective transmission event except of the radio signal received by the respective anchor. I.e., the position estimation omits the radio signal received by the respective anchor.

In step c), the ranging error of the position of the sender estimated in step b) is determined, the ranging error representing the difference between a ground truth distance and an estimated distance of the respective anchor from the sender, where the difference is derived from the ground truth position of the sender and the position of the sender estimated in step b), where out of adjoining intervals of ranging errors that interval is assigned to the ranging error in which the ranging error lies.

In step d), for the clustering classifier of the respective anchor, a quality measure of the cluster class assigned to the radio signal received by the respective anchor is updated, where the updated quality measure is determined based on the interval assigned to the ranging error such that the updated quality measure represents a higher signal quality, the higher the ranging errors covered by the interval assigned to the ranging error are.

Upon the termination of the above steps a) to d) for all preset transmission events of the iteration, signal quality classes are assigned to the cluster classes of the clustering classifier of the respective anchor such that the signal quality of the signal quality class assigned to a cluster class decreases with a decreasing quality measure assigned to the cluster class.

The above embodiment is based on finding that, if a radio signal omitted for a position estimation leads to a high ranging error, this omitted radio signal is responsible for an accurate position estimation and thus has a high signal quality.

In an embodiment of the invention which uses an assignment procedure based on unsupervised learning, radio signals are provided for each preset transmission event out of a group of preset transmission events of a sender out of the one or more senders, where each radio signal is a radio signal received by another anchor of the plurality of anchors in response to the respective preset transmission event. Contrary to the embodiment as described above, the provided radio signals are not accompanied by corresponding ground truth positions of the sender.

In the unsupervised learning approach of the assignment procedure, an iteration over the preset transmission events is performed for a respective anchor, wherein an iteration step of the iteration for respective preset transmission event comprises the following sub-steps a) to c).

In step a), a cluster class of the plurality of cluster classes is assigned to the radio signal received by the respective anchor using the trained clustering classifier of the respective anchor.

In step b), respective values of one or more statistical parameters of signal amplitude information of the radio signal received by the respective anchor are determined, where each value of a respective statistical parameter is associated with a signal quality level.

In step c), a quality measure of the cluster class assigned to the radio signal received by the respective anchor is updated for the clustering classifier of the respective anchor, where the updated quality measure is determined based on the values of the one or more statistical parameters such that the updated quality measure represents a higher signal quality, the higher the signal quality level of the value of a respective statistical parameter is.

Upon the termination of the above steps a) to c) for all preset transmission events of the group of preset transmission events, signal quality classes are assigned to the cluster classes of the clustering classifier of the respective anchor such that the signal quality of the signal quality class assigned to a cluster class decreases with a decreasing quality measure assigned to the cluster class.

The above embodiment is based on the finding that the signal quality of radio signals can be derived from statistical parameters of the signal amplitude information of the radio signals.

In a preferred variant of the above embodiment, the signal amplitude information of the radio signals is the channel impulse response and the one or more statistical parameters refer to at least one of the following parameters:
- the distance between the first local maximum and the highest local maximum within the channel impulse response;
- the amplitude of the highest local maximum within the channel impulse response;
- the value of the Received Signal Strength Indicator derived from the channel impulse response.

In a preferred embodiment, the above clustering classifier is based on k-means clustering or a Gaussian mixture model. Those clustering methods are well known for a skilled person.

In another preferred embodiment, the clustering classifier comprises a dimensionality reduction engine reducing the dimensionality of the signal amplitude information of the radio signals before performing the clustering by the clustering classifier. E.g., an autoencoder may be used as the dimensionality reduction engine. Autoencoders are well known from the prior art and refer to a trained neural network performing the dimensionality reduction.

Besides the above method for generating a predictor, the invention also refers to a computer-implemented method for predicting a position of an object within a predetermined environment by the use of a radio network, where the radio network comprises a plurality of anchors being receivers for radio signals within the radio network, wherein a predictor is used which has been previously generated based on the above described method or one or more preferred embodiments thereof. Alternatively, the method for generating the predictor may also be part of the method for predicting the position of the object.

In the above method for predicting the position of the object, radio signals in response to a transmission event of a radio tag on the object are received by the plurality of anchors, where a respective anchor forwards the received radio signal to the positioning server for a position estimation by the position estimator only in case that the signal quality class determined by the signal classifier of the respective anchor fulfills the threshold criterion with respect to a minimum signal quality, where the position estimator estimates the position of the object based on propagation delays of the radio signals forwarded by the anchors of the plurality of anchors.

Besides the above methods, the invention refers to an apparatus for data processing, where the apparatus is configured to carry out a method for generating a predictor or a method for predicting a position of an object according to the invention or one or more preferred embodiments thereof.

Furthermore, the invention refers to a computer program product with program code, which is stored on a machine-readable carrier, for carrying out a method for generating a predictor or a method for predicting a position of an object according to the invention or one or more preferred embodiments thereof when the program code is executed on a computer.

Moreover, the invention refers to a computer program with program code for carrying out a method for generating a predictor or a method for predicting a position of an object according to the invention or one or more preferred embodiments thereof when the program code is executed on a computer.

In the following, embodiments of the invention will be described in detail with respect to the accompanying drawings, wherein:
- Fig. 1: is a schematic diagram illustrating a localization of an object using a predictor generated by an embodiment of the invention;
- Fig. 2: is a flow chart illustrating a first embodiment of a method for generating a predictor according to the invention;
- Fig. 3: is a schematic diagram illustrating the raging error used in the embodiment of Fig. 2;
- Fig. 4: is a flow chart illustrating a second embodiment of a method for generating a predictor according to the invention;
- Fig. 5: is a diagram illustrating the assignment of signal quality classes to cluster classes performed in the embodiment of Fig. 4;
- Fig 6: is a flow chart illustrating a third embodiment of a method for generating a predictor according to the invention.

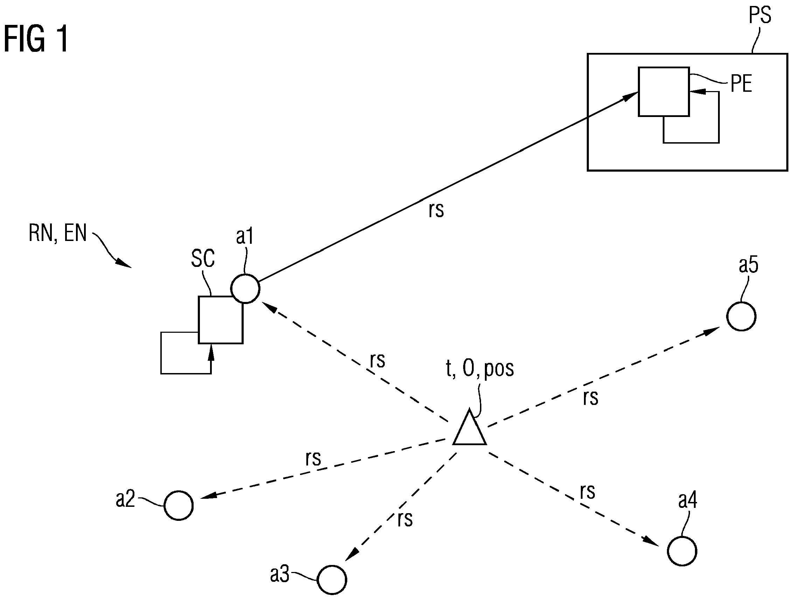

Fig. 1 is a schematic diagram illustrating a localization of an object based on a predictor which has been generated by an embodiment according to the invention. According to Fig. 1, a radio network RN comprising a plurality of anchors a1, a2, a3, a4 and a5 is installed in a predetermined environment EN. The anchors a1, a2, a3, a4 and a5 are corresponding receivers of radio signals rs. Those radio signals are transmitted by a radio tag t on an object O located at the position pos. This object O shall be localized by the radio signals rs. The radio signals rs originate from a burst sent out by the radio tag t (i.e. a radio pulse sent out by the tag t) and arrive at different times at the corresponding anchors a1, a2, ..., a5. The received radio signals each represent a channel impulse response resulting from the burst.

Each of the anchors a1 to a5 comprises a signal classifier SC where such a signal classifier is only shown for anchor a1 in Fig. 1. Each of the signal classifiers SC can transmit the received radio signal to a central positioning server PS which includes a positioning engine PE. In Fig. 1, only the transmission of the radio signal for the signal classifier SC located in anchor a1 is shown by a corresponding arrow. The positioning engine PE estimates the position pos of the object O based on the propagation times of the radio signals arriving at the different anchors a1 to a5. To do so, a well-known method, e.g. based on ToF, is used.

The key idea of the invention described herein is to filter out low quality radio signals, e.g. signals transmitted on a Non-Line-of-Sight path or via a multipath, before they go into the positioning engine PE. In order to filter out these signals, a decentralized approach is used which is based on locally installed signal classifiers SC in each of the anchors a1 to a5. In case that a radio signal received by the corresponding anchor does not fulfill a threshold criterion with respect to a minimum signal quality, this radio signal is discarded and thus not used by the positioning engine PE for determining the position pos of the object O. The decentralized approach for filtering out low quality radio signals has the advantage that much less messages have to be sent to the positioning server PS which eases performance requirements of the communication network between the anchors and the positioning server. Furthermore, the performance requirements for the central positioning engine PE can be lower because the engine can estimate the position based on less signals.

The signal classifiers SC installed in each anchor are trained based on a suitable machine learning in advance, i.e. before performing the localization. This machine learning uses training data of previous transmission events of radio signals by a corresponding sender. In the following, three different embodiments for training the signal classifier SC of each anchor are described.

Before describing those embodiments, some prerequisites valid for all embodiments are given as follows:
- The signal classifiers SC are initially stored on the respective anchors and the training is performed for the locally stored signal classifiers. However, the training is hosted centrally by the positioning server PS.
- Each (trained) signal classifier uses a number of signal quality classes QC1, QC2, ... , QCn for classifying a corresponding received radio signal based on the channel impulse response CIR. The signal quality class QC1 corresponds to the highest signal quality, the quality class QC2 to the second-highest signal quality, ... and so on. Hence, the quality class QCn refers to the lowest signal quality.
- The radio signal rs received by a corresponding anchor comprises at least a signal ID, the sender/tag ID, the anchor ID (destination), the time of arrival, the signal strength RSSI (RSSI = Received Signal Strength Indicator) and an array of floating numbers representing the channel impulse response CIR.
- A set of adjoining intervals of ranging errors with respective upper and lower boundaries are defined. The upper and lower boundaries of those intervals can either be equally divided or the length of the intervals can vary, e.g. the interval length may increase towards higher ranging errors as such ranging errors are more rarely occurring.

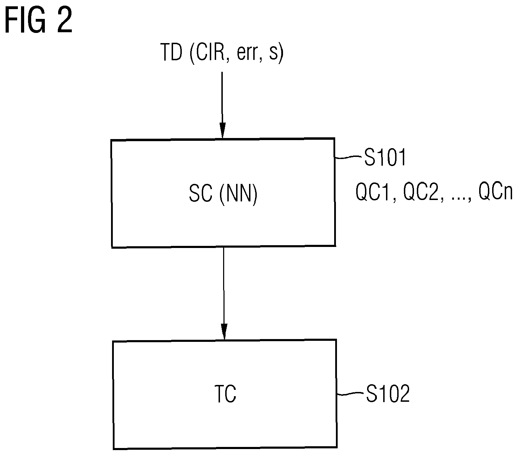

Fig. 2 shows a first embodiment of the training of a signal classifier SC for a respective anchor of the radio network RN in Fig. 1. The training is performed in step S101 of Fig. 2. As mentioned above, the training is based on training data TD. In the embodiment of Fig. 2, the training data TD comprise, for each burst (i.e. transmission event) sent by a sender s being of the same type as radio tag t, a corresponding channel impulse response CIR received by the respective anchor and a ranging error err associated with the respective channel impulse response CIR. The training of Fig. 2 is based on a supervised learning of a neural network NN being the signal classifier SC in the first embodiment described herein.

The ranging error err of the training data TD is derived by the use of a so called ground truth position which is the assumed real position of the sender s. This ground truth position may be determined during the collection phase of the training data. In this collection phase, the sender s moves in the predetermined environment EN and transmits at corresponding transmission events radio signals which result in channel impulse responses at the anchors. For obtaining the ground truth positions, the location of the sender at a transmission event may be measured by a highly accurate measurement system located on the same platform as the sender s. E.g., a LIDAR system or an optical system may be used for measuring this position which is regarded as the ground truth position.

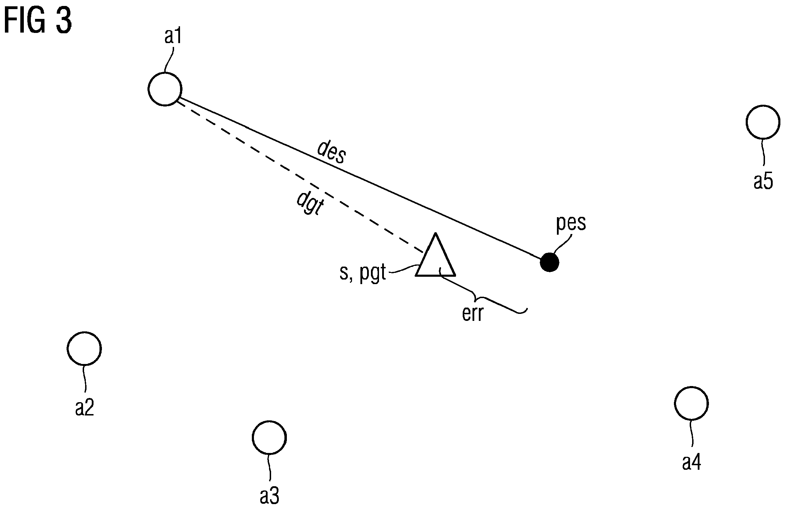

Fig. 3 illustrates by way of example the ranging error err of the training data TD for the anchor a1 of the radio network RN. The ground truth position of the sender s at a corresponding transmission event is designated as pgt in Fig. 3. By the use the of radio signals received by all anchors and being transmitted by the anchors to the positioning server PS, the position of the sender s is estimated by the positioning engine PE. This estimated position is designated as pes in Fig. 3. The distance between the ground truth position pgt and the anchor a1 is indicated by a dashed line designated as dgt in Fig. 3. This distance is referred as to the ground truth distance. The distance between the estimated position pes estimated by the positioning engine PE and the anchor a1 is indicated by a solid line designated as des in Fig. 3. This distance is referred as to the estimated distance. The ranging error err for the anchor a1 is the (absolute) difference between the ground truth distance dgt and the estimated distance des. Evidently, this ranging error is different for different anchors due to the fact that the distances des and dgt are different for different anchors though the positions pgt and pes are the same.

The neural network NN is learned in step S101 of Fig. 2 by the training data TD comprising the channel impulse responses CIR with associated ranging errors err valid for the respective anchor. To do so, the channel impulse response CIR is fed to the corresponding neural network NN whereupon a forward propagation of the neural network is performed. I.e., the channel impulse response is fed in as input data and the network is executed in a forward direction (moving through hidden layers and processed per activation function). The generated output is an estimated ranging error which is compared against the ranging error err of the training data which is acting as a data label. The corresponding loss representing the difference between the ranging error output by the neural network NN and the ranging error err of the training data TD is backpropagated through the neural network in a corresponding training step. This backpropagation step is well known for a skilled person and thus not described in detail.

Channel impulse responses CIR with the associated ranging errors err of the transmission events included in the training data TD are processed iteratively during the training. After the training, a trained neural network NN is obtained which generates a corresponding ranging error in response to a channel impulse response of a radio signal rs received by the respective anchor.

At the end of step S101, a ranging error err output by the neural network NN is associated with one of the signal quality classes QC1 to QCn. To do so, each of the classes is associated with a corresponding interval of ranging errors where an interval having higher ranging errors refers to a signal quality class with lower signal quality. The ranging error output by the neural network NN represents the signal quality class of the interval in which the ranging error lies. As a result, a trained signal classifier SC is obtained which determines a signal quality class out of the classes QC1 to QCn for a channel impulse response CIR fed to the neural network NN.

After the training of the signal classifier in step S101, a threshold criterion TC is established in step S102 on the corresponding anchor. This threshold criterion describes a minimum signal quality for the corresponding signal quality classes. E.g., the criterion may be such that only a predetermined number of signal quality classes having the highest signal quality fulfills the threshold criterion, e.g. only the signal quality classes QC1, QC2 and QC3. The other signal quality classes do not fulfill the threshold criterion. The threshold criterion may be adapted at the beginning or during the use of the trained signal classifier for localization.

After having established the threshold criterion TC, the signal classifier SC can be used as a filter when localizing an object. To do so, a radio signal received in the corresponding anchor from the object to be localized is fed to the signal classifier which outputs a signal quality class by the use of the neural network NN. Only in case that the signal quality class fulfills the threshold criterion TC, the radio signal is forwarded to the positioning engine PE in order to be used for the position estimation of the object O. In case that the radio signal received by the respective anchor does not fulfill the threshold criterion TC, this radio signal is discarded and not used by the positioning engine PE for estimating the position of the object O.

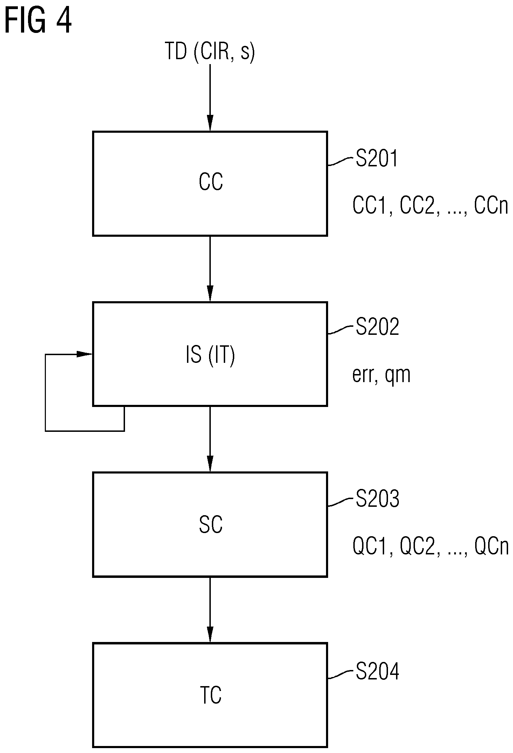

The training as described with respect to Fig. 2 is a supervised training using for each channel impulse response a known ranging error. However, the training of the signal classifier SC may also be based on a semi-supervised training. A second embodiment implementing such a semi-supervised training is described in the following with respect to Fig. 4.

Fig. 4 shows analogously to Fig. 2 a training of a signal quality classifier SC for a respective anchor. This training is performed for each anchor of the radio network. In a first step S201 of the method of Fig. 4, a clustering classifier CC is trained based on unsupervised learning. This training uses corresponding training data TD comprising a plurality of channel impulse responses CIR of radio signals received by the respective anchor in response to corresponding transmission event of a sender s. The clustering classifier CC clusters the channel impulse responses (i.e. the received radio signals) of the training data in corresponding clusters represented by cluster classes CC1, CC2, ..., CCn. Conventional clustering algorithms, such as k-means clustering or a Gaussian mixture model, may be used. When using k-means clustering, the sum of the quadratic deviations of the channel impulse responses from the cluster centroids of the clusters is minimized. After having trained the clustering classifier CC, this classifier can assign new channel impulse responses received by the respective anchor to one of the cluster classes CC1, CC2, ..., CCn.

In a next step S202, an iteration step IS of an iteration IT is performed. Each iteration step IS refers to a preset transmission event of a corresponding sender s within the radio network RN out of a plurality of preset transmission events. The preset transmission event may be different from the transmission events of the training data TD. However, the preset transmission events may also be taken from the training data. In most cases, the preset transmission events take place after the transmission events of the training data TD. The preset transmission events differ from the transmission events of the training data TD in that for a preset transmission event, the ground truth position of the sender performing the preset transmission event is known, e.g. by a corresponding measurement by a LIDAR system.

Step S202 of Fig. 4 comprises several sub-steps. In a first sub-step, the cluster class of the radio signal (i.e. its channel impulse response) received by the respective anchor for the respective preset transmission event is determined by the trained clustering classifier CC. In a second sub-step, the position of the sender at the respective transmission event is estimated by the positioning engine PE using the radio signals received for the respective transmission event in all anchors except of the radio signal of the respective anchor. For this position estimation, the anchors transmit the received radio signal to the positioning server PS. Based on the estimated position, the ranging error err for the respective anchor is determined in a third sub-step. As described above, the ranging error represents the difference between the ground truth distance and the estimated distance of the respective anchor from the sender. This difference is derived from the ground truth position of the sender and the position of the sender as estimated by the positioning engine PE, disregarding the radio signal received by the respective anchor. The ranging error err is then assigned to that interval of the above described intervals of ranging errors in which the ranging error lies.

In a fourth sub-step of the iteration step IS, a quality measure qm of the cluster class assigned to the radio signal of the respective anchor is updated. The updated quality measure qm is determined based on the interval of ranging errors associated the ranging error (i.e. the interval in which the ranging error lies) such that the updated quality measure represents a higher signal quality, the higher the ranging errors within the interval associated with the ranging error are. This updating step is based on the finding that the position of the sender is estimated without the radio signal received by the respective anchor so that a high ranging error indicates that the radio signal received by the respective anchor is of good quality and will lower the ranging error when being considered by the positioning engine PE. Hence, higher ranging errors lead to a higher updated quality measure qm.

After having performed the iteration IT for all preset transmission events, signal quality classes QC1, QC2, ... , QCn are assigned in step S203 to the cluster classes CC1, CC2, ... , CCn using the quality measures qm calculated by the iteration IT. According to this assignment, the signal quality of the signal quality class assigned to a cluster class decreases with a decreasing quality measure assigned to the cluster class. The result of step S203 is the trained signal classifier SC.

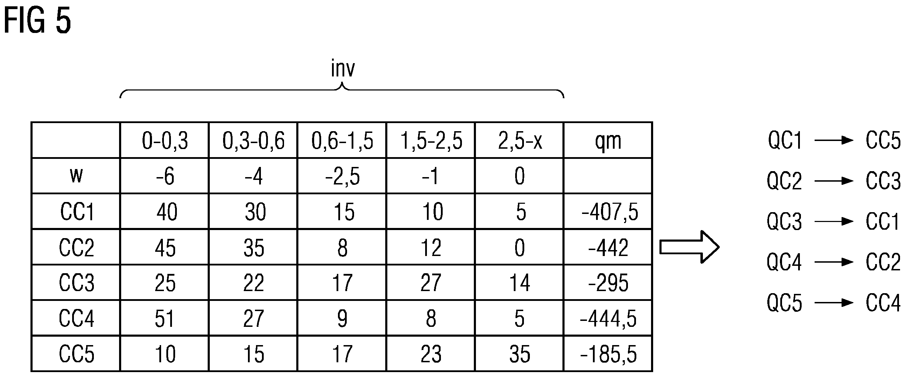

Fig. 5 illustrates an embodiment for the above assignment step S203 in combination with an example of a quality measure qm. Fig. 5 shows a table indicating in the second to sixth entries of the first line corresponding intervals inv of ranging errors. The intervals are next to each other and cover higher ranging errors from left to right in the table of Fig. 5. Each interval inv is associated with a weight w indicated in the second line of the table in Fig. 5. Furthermore, Fig. 5 shows as an example five clustering classes CC1, CC2, CC3, CC4 and CC5 corresponding to respective lines within the table of Fig. 5. The entries belonging to the third to seventh line and the second to sixth column in the table of Fig. 5 indicate the occurrences of ranging errors for radio signals assigned to respective cluster classes in corresponding intervals inv of ranging errors. The total number of those occurrences correspond to the number of preset transmission events. E.g., radio signals assigned to class CC1 and having a ranging error between 0 and 0,3 occurred 40 times over the preset transmission events.

In each iteration step IS of the iteration IT, the weight corresponding to the interval inv associated with the ranging error of the received radio signal is added to the quality measure qm of the cluster class of the radio signal. Hence, the quality measure qm for a respective cluster class at the end of the iteration IT is a sum over terms where each term refers to a corresponding interval inv and represents the product of the weight w assigned to the interval multiplied with the occurrences of the ranging error in the corresponding interval for the respective cluster class. E.g., for cluster class CC4, this results in a value of the quality measure qm which equals -444,5 = (-6 * 51) + (-4 * 27) + (-2,5 * 9) + (-1 * 8) + (0 * 5).

After having determined the quality measures qm for the cluster classes CC1 to CC5, signal quality classes QC1 to QC5 are assigned to the corresponding cluster classes CC1 to CC5, as illustrated in the right part of Fig. 5. As can be derived from the table of Fig. 5, the cluster class with the highest quality measure qm (i.e. the lowest absolute value of the quality measure) is CC5, followed by the class CC3 having the second-highest quality measure, the class CC1 having the third-highest quality measure, the class CC2 having the fourth-highest quality measure and the quality class CC4 having the fifth-highest quality measure. Hence, signal quality class QC1 is assigned to cluster class CC5, signal quality class QC2 is assigned to cluster class CC3, signal quality class QC3 is assigned to cluster class CC1, signal quality class QC4 is assigned to cluster class CC2 and signal quality class QC5 is assigned to cluster class CC4. After this assignment, the training of the signal classifier SC is finished. The trained signal classifier SC can then determine for a new radio signal received by the respective anchor a corresponding quality class.

In the next step S204 shown Fig. 4, a threshold criterion TC is implemented in each signal classifier which indicates which of the quality classes out of the signal quality classes QC1 to QCn are over a threshold with respect to a sufficient signal quality.

The method as described with respect to Fig. 4 results in a predictor for estimating a position of an object in the radio network. The predictor is based on corresponding signal classifiers SC in the respective anchors in combination with the positioning engine PE in the central positioning server PS. In case that a new radio signal is received by the respective anchor, the anchor determines by the use of the signal classifier SC if the radio signal fulfills the threshold criterion TC. Only in this case, the radio signal is forwarded to the positioning engine PE which uses this signal for position estimation. Hence, the positioning engine PE only uses high quality radio signals for estimating the position of a corresponding object.

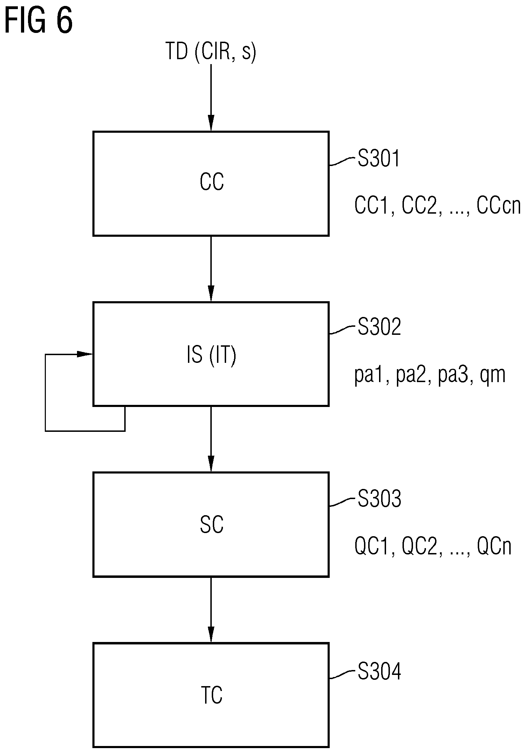

Fig. 6 shows a third embodiment for training a signal classifier SC for a respective anchor. This training is based on unsupervised learning, i.e. the training dispenses with information referring to the ground truth position of a sender. The training in Fig. 6 uses the same training data TD as the training of Fig. 4, i.e. corresponding channel impulse responses CIR of radio signals resulting from preset transmission events of a sender s. In step S301 of Fig. 3, a clustering classifier CC is learned in order to assign received radio signals to respective cluster classes CC1, CC2, ..., CCn. The learning of the clustering classifier CC in step S301 is identical to the learning of the clustering classifier in step S201 of Fig. 4. Hence, reference is made to the description of Fig. 4.

In step S302 of Fig. 6, an iteration step IS of an iteration IT is performed. Each iteration step IS refers to a preset transmission event of a corresponding sender s within the radio network RN out of a plurality of preset transmission events. The preset transmission event may be different from the transmission events of the training data TD. However, the preset transmission events may also be taken from the training data. In most cases, the preset transmission events take place after the transmission events of the training data TD.

The iteration step IS of Fig. 6 comprises several sub-steps. In a first sub-step, the cluster class of the radio signal (i.e. its channel impulse response) received by the respective anchor for the respective preset transmission event is determined by the trained clustering classifier CC. In a second sub-step, respective values of one or more statistical parameters pa1, pa2 and pa3 of the radio signal (i.e. its channel impulse response) received by the respective anchor are determined, where each value of a respective statistical parameter is associated with a signal quality level. Preferably, ranges of those values are associated with respective signal quality levels so that the signal quality level is the same for an associated range of values. In the embodiment of Fig. 6, three statistical parameters pa1, pa2 and pa3 are considered. However, the number of statistical parameters may be less or even higher.

By way of example, the statistical parameters may include the following parameters:
- The parameter of the distance between the first local maximum and the highest local maximum in the channel impulse response. The first local maximum and the highest local maximum are also known as the first path and the peak path with respect to UWB channel impulse responses. A short distance between those maxima means a high quality level of the radio signal, whereas larger distances result from multipath or even Non-Line-of-Sight conditions and result in lower signal quality levels.
- The amplitude of the highest local maximum within the channel impulse response. The higher this amplitude is, the better is the signal quality level.
- The value of the Received Signal Strength Indicator RSSI derived from the channel impulse response. The higher this value is, the better is the signal quality level.

In a third sub-step of the iteration step IS, a quality measure qm of the cluster class assigned to the radio signal received by the respective anchor is updated, where the updated quality measure is determined based on the values of the statistical parameters such that the updated quality measure represents a higher signal quality, the higher the signal quality level of the value of the respective parameter is.

In the example of the above three statistical parameters, the update of the signal quality level may be performed by adding negative points depending on the signal quality level to the quality measure of the cluster class assigned to the radio signal received by the respective anchor. By way of example, the point system may be established as follows:
Distance first path and peak path > 3 := - 10 points
Distance first path and peak path > 5 := - 30 points
Distance first path and peak path > 7 := - 50 points
Distance first path and peak path > 9 := - 70 points
Amplitude of peak path < 5000 := - 10 points
Amplitude of peak path < 4000 := - 30 points
Amplitude of peak path < 3000 := - 50 points
Amplitude of peak path < 2000 := - 70 points
Value of the RSSI < 600 := -10 points
Value of the RSSI < 500 := -20 points
Value of the RSSI < 400 := -30 points
Value of the RSSI < 300 := -40 points

The points of the corresponding parameters are added up for the received radio signal. This sum is then added to the quality measure qm of the cluster class assigned to the radio signal, i.e. to the value of this quality measure resulting from the last iteration step.

At the end of the iteration IT over the preset transmission events, corresponding quality measures qm for the respective cluster classes CC1, CC2, ..., CCn are obtained. Those quality measures are determined in the method of Fig. 6 by statistical parameters of the channel impulse responses. Contrary to that, in the previous embodiment of Fig. 4, the quality measures qm have been determined based on ranging errors.

In the next step S303 of Fig. 6, signal quality classes QC1, QC2, ..., QCn are assigned to the cluster classes of the clustering classifier CC of the respective anchor such that the signal quality of the signal quality class assigned to a cluster class decreases with a decreasing quality measure qm assigned to the cluster class. Step S303 corresponds to step S203 in Fig. 4. Therefore, reference is made to the description of step S203 of Fig. 4. At the end of step S303, a trained signal classifier SC for each anchor is obtained. Thereafter, in step S304, a corresponding threshold criterion TC is implemented in each anchor. Step S304 corresponds to step S204 of Fig. 4. Hence, reference is made to the description of step S204 in Fig. 4. After having finished step S304, the generation of the predictor for estimating the position of an object is completed and the predictor can be used for localizing an object based on the method as described above with respect to Fig. 1.

The invention as described in foregoing has several advantages. Particularly, a central positioning engine for determining the position of an object based on propagation delays of radio signals only uses high quality radio signals. To do so, low quality radio signals are filtered out decentrally by trained signal classifiers locally stored in the anchors receiving the radio signals. Due to this filtering, less messages are transmitted between the anchors and the central positioning engine and a higher accuracy in the position determination can be achieved due to omitting low quality radio signals.

Independent of the grammatical term usage, individuals with male, female or other gender identities are included within the term.

## Claims

1. A computer-implemented method for generating a predictor for a position (pos) of an object (O) within a predetermined environment (EN) by the use of a radio network (RN), where the radio network (RN) comprises a plurality of anchors (a1, ..., a5) being receivers for radio signals (rs) within the radio network (RN), wherein a position estimator (PE) in a positioning server (PS) is provided for estimating the position (pos) of the object (O) based on propagation delays of radio signals (rs) received by different anchors (a1, ..., a5) in response to a transmission event of a radio tag (t) on the object (O), the method comprising the following steps for a respective anchor (a1, ..., a5) of the plurality of anchors (a1, ..., a5):
i) training for the respective anchor (a1, ..., a5) a signal classifier (SC) and locally storing in the respective anchor (a1, ..., a5) the trained signal classifier (SC) for being executed on the respective anchor (a1, ..., a5), the signal classifier (SC) being configured to classify the signal quality of a radio signal (rs) received by the respective anchor (a1, ..., a5) by determining a signal quality class (QC1, ..., QCn) out of a plurality of signal quality classes (QC1, ..., QCn) for the received radio signal (rs) based on signal amplitude information (CIR) of the received radio signal (rs), where the training of the signal classifier (SC) is based on machine learning using training data (TD) comprising, for each transmission event of a plurality of transmission events of a sender (s) out of one or more senders (s) which are located within the predetermined environment (EN) and are of the same type as the radio tag (t) on the object (O), the signal amplitude information (CIR) of the radio signal (rs) received by the respective anchor (a1, ..., a5) in response to the respective transmission event;
ii) configuring the respective anchor (a1, ..., a5) such that the respective anchor (a1, ..., a5) forwards a received radio signal (rs) to the positioning server (PS) for a position estimation by the position estimator (PE) only in case that the signal quality class (QC1, ..., QCn) determined by the signal classifier (SC) of the respective anchor (a1, ..., a5) fulfills a threshold criterion (TC) with respect to a minimum signal quality.

2. The method according to claim 1, wherein the radio network (RN) is based on a short range radio technology, preferably UWB, or a cellular radio technology, preferably 5G or 6G.

3. The method according to claim 1 or 2, wherein the signal amplitude information (CIR) of the radio signals (rs) is the channel impulse response.

4. The method according to one of the preceding claims, wherein the signal classifier (SC) for the respective anchor (a1, ..., a5) is a neural network structure (NN), where the training data (TD) comprise, besides the signal amplitude information (CIR) of the radio signal (rs) received by the respective anchor (a1, ..., a5) in response to the respective transmission event, a ranging error (err) for the respective anchor (a1, ..., a5) representing the difference between a ground truth distance (dgt) and an estimated distance (des) of the respective anchor (a1, ..., a5) from the sender (s), where the difference is derived from a ground truth position (pgt) of the sender (s) and the position (pes) of the sender (s) estimated by the position estimator (PE) for the respective transmission event, where the machine learning is a supervised learning having the target that the neural network structure (NN) outputs, for a respective transmission event of the training data (TD), the ranging error (err) for the respective anchor (a1, ..., a5) as a result of an input of the signal amplitude information (CIR) of the radio signal (rs) received by the respective anchor (a1, ..., a5) in response to the respective transmission event, where the signal classifier (SC) stores adjoining intervals (inv) of ranging errors (err) as signal quality classes (QC1, ..., QCn) in order to assign a ranging error (err) output by the neural network structure (NN) and thus the radio signal (rs) received by the respective anchor (a1, ..., a5) having the signal amplitude information (CIR) which is the input of the neural network structure (NN) to the signal quality class (QC1, ..., QCn) corresponding to the interval (inv) in which the ranging error (err) lies.

5. The method according to claim 4, wherein the neural network structure (NN) comprises one or more convolutional neural networks and/or one or more deep neural networks.

6. The method according to one of claims 1 to 4, wherein the training of the signal classifier (SC) for the respective anchor (a1, ..., a5) according to step i) comprises a training of a clustering classifier (CC) by unsupervised machine learning based on the signal amplitude information (CIR) of the radio signal (rs) received by the respective anchor (a1, ..., a5) for each transmission event of the training data (TD), where the trained clustering classifier (CC) is configured to assign to a radio signal (rs) received by the respective anchor (a1, ..., a5) a cluster class (CC1, CC2, ..., CCn) out of a plurality of cluster classes (CC1, CC2, ..., CCn) based on the signal amplitude information (CIR) of the radio signal (rs), where in a subsequent assignment procedure the plurality of signal quality classes (QC1, ..., QCn) are assigned to corresponding cluster classes (CC1, CC2, ..., CCn).

7. The method according to claim 6, wherein the assignment procedure is a procedure in which, for each preset transmission event out of a group of preset transmission events of a sender (s) out of the one or more senders (s), radio signals (rs) together with the ground truth positions (pgt) of the sender (s) at the time of transmitting the radio signals (rs) are provided, each radio signal (rs) being a radio signal received by another anchor (a1, ..., a5) of the plurality of anchors (a1, ..., a5) in response to the respective preset transmission event, wherein for the respective anchor (a1, ..., a5) an iteration (IT) over the preset transmission events is performed, where an iteration step (IS) of the iteration (IT) for a respective preset transmission event comprises the following sub-steps:
a) assigning a cluster class (CC1, CC2, ..., CCn) of the plurality of cluster classes (CC1, CC2, ..., CCn) to the radio signal (rs) received by the respective anchor (a1, ..., a5) using the trained clustering classifier (CC) of the respective anchor (a1, ..., a5);
b) estimating the position (pes) of the sender (s) by the position estimator (PE) in the positioning server (PS) based on the propagation delays of all radio signals (rs) received by the plurality of anchors (a1, ..., a5) in response to the respective transmission event except of the radio signal (rs) received by the respective anchor (a1, ..., a5);
c) determining the ranging error (err) of the position (pes) of the sender (s) estimated in step b), the ranging error (err) representing the difference between a ground truth distance (dgt) and an estimated distance (des) of the respective anchor (a1, ..., a5) from the sender (s), where the difference is derived from the ground truth position (pgt) of the sender (s) and the position (pes) of the sender (s) estimated in step b), where out of adjoining intervals (inv) of ranging errors (err) that interval (inv) is assigned to the ranging error (err) in which the ranging error (err) lies;
d) updating for the clustering classifier (CC) of the respective anchor (a1, ..., a5) a quality measure (qm) of the cluster class (CC1, CC2, ..., CCn) assigned the radio signal (rs) received by the respective anchor (a1, ..., a5), where the updated quality measure (qm) is determined based on the interval (inv) assigned to the ranging error (err) such that the updated quality measure (qm) represents a higher signal quality, the higher the ranging errors (err) covered by the interval (inv) assigned to the ranging error (err) are;
wherein, upon the termination of steps a) to d) for all preset transmission events, signal quality classes (QC1, QC2, ..., QCn) are assigned to the cluster classes (CC1, CC2, ..., CCn) of the clustering classifier (CC) of the respective anchor (a1, ..., a5) such that the signal quality of the signal quality class (QC1, QC2, ..., QCn) assigned to a cluster class (CC1, CC2, ..., CCn) decreases with a decreasing quality measure (qm) assigned to the cluster class (CC1, CC2, ..., CCn).

8. The method according to claim 6, wherein the assignment procedure is a procedure in which, for each preset transmission event out of a group of preset transmission events of a sender (s) out of the one or more senders (s), radio signals (rs) are provided, each radio signal (rs) being a radio signal received by another anchor (a1, ..., a5) of the plurality of anchors (a1, ..., a5) in response to the respective preset transmission event, wherein for the respective anchor (a1, ..., a5) an iteration (IT) over the preset transmission events is performed, where an iteration step (IS) of the iteration (IT) for a respective preset transmission event comprises the following sub-steps:
a) assigning a cluster class (CC1, CC2, ..., CCn) of the plurality of cluster classes (CC1, CC2, ..., CCn) to the radio signal (rs) received by the respective anchor (a1, ..., a5) using the trained clustering classifier (CC) of the respective anchor (a1, ..., a5);
b) determining respective values of one or more statistical parameters (pa1, pa2, pa3) of the signal amplitude information (CIR) of the radio signal (rs) received by the respective anchor (a1, ..., a5), where each value of a respective statistical parameter (pa1, pa2, ..., pan) is associated with a signal quality level;
c) updating for the clustering classifier (CC) of the respective anchor (a1, ..., a5) a quality measure (qm) of the cluster class (CC1, CC2, ..., CCn) assigned the radio signal (rs) received by the respective anchor (a1, ..., a5), where the updated quality measure (qm) is determined based on the values of the one or more statistical parameters (pa1, pa2, pa3) such that the updated quality measure (qm) represents a higher signal quality, the higher the signal quality level of the value of a respective statistical parameter (pa1, pa2, pa3) is;
wherein, upon the termination of steps a) to c) for all preset transmission events, signal quality classes (QC1, QC2, ..., QCn) are assigned to the cluster classes (CC1, CC2, ..., CCn) of the clustering classifier (CC) of the respective anchor (a1, ..., a5) such that the signal quality of the signal quality class (QC1, QC2, ..., QCn) assigned to a cluster class (CC1, CC2, ..., CCn) decreases with a decreasing quality measure (qm) assigned to the cluster class (CC1, CC2, ..., CCn).

9. The method according to claim 8, wherein the signal amplitude information (CIR) of the radio signals (rs) is the channel impulse response and the one or more statistical parameters (pa1, pa2, pa3) refer to at least one of the following parameters:
- the distance between the first local maximum and the highest local maximum within the channel impulse response (CIR);
- the amplitude of the highest local maximum within the channel impulse response (CIR);
- the value of the Received Signal Strength Indicator derived from the channel impulse response (CIR).

10. The method according to one of claims 6 to 9, wherein the clustering classifier (CC) is based on k-means clustering or a Gaussian Mixture Model.

11. The method according to one of claims 6 to 10, wherein the clustering classifier (CC) comprises a dimensionality reduction engine reducing the dimensionality of the signal amplitude information (CIR) of the radio signals (rs) before performing the clustering by the clustering classifier (CC).

12. A computer-implemented method for predicting a position (pos) of an object (O) within a predetermined environment (EN) by the use of a radio network (RN), where the radio network (RN) comprises a plurality of anchors (a1, ..., a5) being receivers for radio signals within the radio network (RN), wherein a predictor has been generated or is being generated according to a method of one of the preceding claims and wherein radio signals (rs) in response to a transmission event of a radio tag (t) on the object (O) are received by the plurality of anchors (a1, ..., a5), where a respective anchor (a1, ..., a5) forwards the received radio signal (rs) to the positioning server (PS) for a position estimation by the position estimator (PE) only in case that the signal quality class (QC1, ..., QCn) determined by the signal classifier (SC) of the respective anchor (a1, ..., a5) fulfills the threshold criterion (TC) with respect to a minimum signal quality, where the position estimator (PE) estimates the position (pos) of the object (O) based on propagation delays of the radio signals (rs) forwarded by the anchors (a1, ..., a5) of the plurality of anchors (a1, ..., a5).

13. An apparatus for data processing, wherein the apparatus is configured to carry out a method according to one of the preceding claims.

14. A computer program product with program code, which is stored on a machine-readable carrier, for carrying out a method according to one of claims 1 to 12 when the program code is executed on a computer.

15. A computer program with program code for carrying out a method according to one of claims 1 to 12 when the program code is executed on a computer.
